# EUROPEAN PATENT APPLICATION

(11) **EP 1 400 916 A2**
(43) Date of publication of application: **24.03.2004**
(21) Application number: 03020441.6
(22) Date of filing: 11.09.2003
(51) Int. Cl.: G06K 9/20

(54) **On board image processing apparatus**

(30) Priority: 12.09.2002 JP 2002266482
(71) Applicant: Hitachi, Ltd., Chiyoda-ku, Tokyo 101-8010 (JP)
(72) Inventor: Monji, Tatsuhiko Hitachi Ltd Intell. Prop. Group, Chiyoda-ku Tokyo 100-8220 (JP)
(74) Representative: Beetz & Partner Patentanwälte

(57) **Abstract**

The present invention provides a small sized on board image processing apparatus with high detection performances of objects, such as a run lane. The apparatus that recognizes surrounding objects of a vehicle, based on image signals obtained by picking-up the circumference of the vehicles with an image pick-up device (3), the image pick-up device (3) being equipped with a first pixel row area (31 a, 31c, ...) which has sensitivity to visible light and a second pixel row area (31 b, 31d, ...) which has sensitivity to invisible light alternatively, wherein the apparatus further comprises an image signal processing section (4) for recognizing the objects using visible light zone image signals obtained from the first area and image signals obtained from the second area.

## Description

### FIELD OF THE INVENTION

This invention relates to an on board image processing apparatus which detects a run lane etc. by processing image signals acquired by picking-up circumstances of vehicles.

### DESCRIPTION OF THE RELATED ART

The Japanese Patent Laid-open 2001-057676 discloses an apparatus in which an amount of light transmission is changed with an infrared light filter disposed in front of an image sensor so that an amount of light transmission of the infrared light is adjusted thereby to pick-up an image the circumstances of vehicles. According to this apparatus, it is possible to pick-up the image in a tone near the tone seen by the naked eye in the bright place, and also to pick-up an increased night vision in a dark place. A run lane is detectable by recognizing white lines on roads from the picked-up images.

Moreover, there is disclosed in the Japanese Patent Laid-open 2000-230805 an apparatus that can recognize a lane marker image and detects a run lane by the difference between images having different deviation components.

Further, the Japanese Patent Laid-open 11-136703 discloses an apparatus that extracts a stereo-object by removing background images by means of subtracting processing of images acquired through an optical filter in which there are homogeneously distributed domains, for intercepting a specific wavelength and domains for transmitting a specific wavelength.

### SUMMARY OF THE INVENTION

According to such conventional apparatuses, since the apparatus disclosed in the Japanese Patent Laid-open 2001-057676 employs a technique of recognizing white lines on roads and detecting run lanes, the detectability of run lanes is not good in an environment where the white lines on the road are dirty. Moreover, the apparatus disclosed in the Japanese Patent Laid-open 2000-230805 employs two image sensors, which carry out spectrography of the incident light using prisms, etc., in order to obtain images, which have different amounts of transmission of infrared light, and therefore, the apparatus has an obstacle to downsizing the image pick-up section.

Moreover, the apparatus disclosed in the Japanese Patent Laid-open 11-136703 employs a method to extract a stereo-object by the existence of reflection of infrared light, but it does not comprise a technical teaching or suggestion about how to detect the run lanes, etc., in the circumstances of vehicles.

One of the objects of this invention is to provide a small-sized on board image processing apparatus with a high detection performance of objects, such as white lines of vehicles and reflectors ( run lanes), etc. in circumstances of vehicles.

Another object of this invention is to provide an on board image processing apparatus, which can identify white lines, light reflectors, traffic lights (traffic signals), preceding running cars, oncoming cars, etc. with high accuracy even at night.

Furthermore, another object of this invention is to provide an on board image processing apparatus, which can attain the above-mentioned images of the objects by relatively simple constructions.

The above problems are solved according to the independent claims. The dependent claims relate to preferred embodiments of the concept of the present invention.

The present invention relates to an on board image processing apparatus, which can recognize objects in the circumstance of vehicles, based on the image signal acquired by picking-up the images of the circumstance of vehicles by means of an image pick-up device. The above-mentioned image pick-up device is equipped with a first pixel row area, which has sensitivity to visible light, and a second pixel row area, which has sensitivity to invisible light, the first and second pixel row areas being arranged alternatively, and is equipped with an image-processing section, which recognizes objects using the image signals of the visible light area acquired from the first pixel row area, and image signals of the invisible light area acquired by the second pixel row area.

### BRIEF DESCRIPTION OF THE DRAWINGS

Fig. 1 is a functional-block diagram of the on board image processing apparatus in one embodiment of this invention.
Fig. 2 is a schematic diagram showing the correlation between the infrared light filter of a comb-like structure and the pixel rows in the image pick-up device of the on board image processing apparatus shown in Fig. 1.
Figs. 3a to 3f are the schematic diagrams of the images based on the image signals acquired by picking-up the white lines, which represent run lanes on the roads with an image pick-up device 3 of the on board image processing apparatus shown in Fig. 1.
Figs. 4a to 4d are schematic diagrams showing a method of detecting a run lane, by recognizing the white line images in the image signals acquired by picking-up the images with the image pick-up device 3 of the on board image processing apparatus shown in Fig. 1.
Figs. 5a to 5f are schematic diagrams explaining a method of detecting a run lane based on the image signals acquired by picking-up a bad environment, where the contrast of a white line and a road surface is low, with the image pick-up device 3 of the on board image processing apparatus shown in Fig. 1.
Figs. 6a to 6c are schematic diagrams explaining a method of recognizing the white line images by means of a presumption method of a white line.
Figs. 7a to 7c are schematic diagrams explaining a method of recognizing the white line image by means of a presumption method of white line composition.
Figs. 8a to 8c are schematic diagrams explaining a method of recognizing white line images by means of a presumption of white line difference value.
Fig. 9 is a flow chart of a control processing method for switching an image recognition processing method that CPU of the image-processing section performs and for switching a lightening state of an infrared light floodlight and a headlight in the on board image processing apparatus shown in Fig. 1.
Fig. 10 is a characteristic graph showing the relation among the brightness of an image-picked-up object, the electronic shutter value (shutter speed) of an image pick-up device, and the image signal value (concentration value).
Fig. 11 is a flow chart, which shows a control processing method for changing the electronic shutter speed that CPU of the image-processing section performs in the on board image processing apparatus shown in Fig. 1.
Fig. 12 is a flow chart showing a judging method of day and night, which CPU of the image-processing section performs in the on board image processing apparatus shown in Fig. 1.

### DESCRIPTION OF THE PREFERRED EMBODIMENTS

The embodiments of this invention will be explained with reference to drawings.

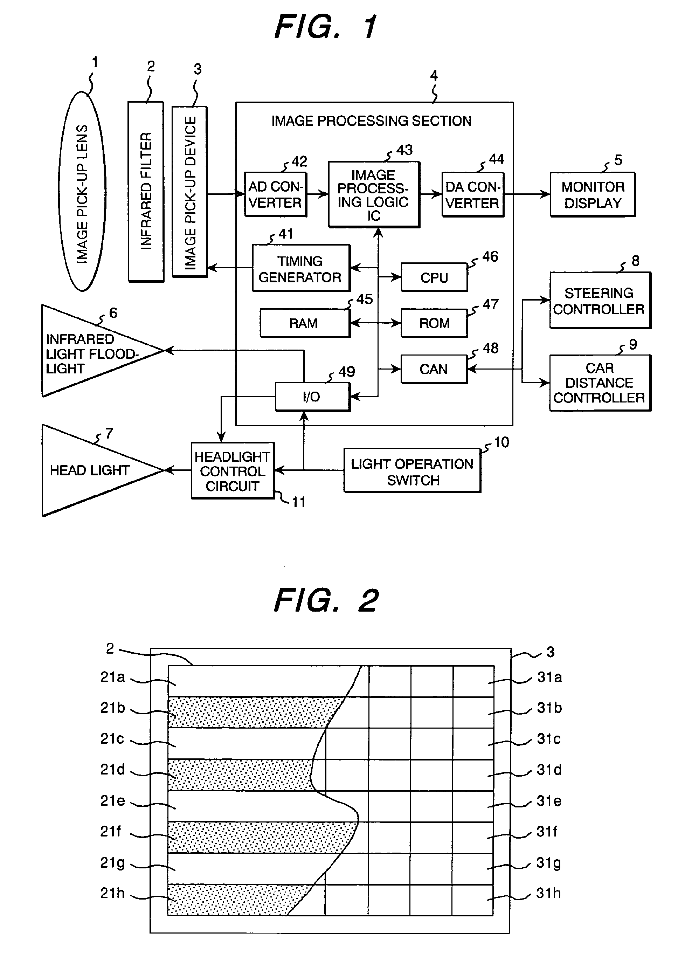

Fig. 1 is a functional-block diagram of the on board image processing apparatus of one embodiment of this invention. In Fig. 1, 1 denotes an image pick-up lens, 2 an infrared light filter of a comb type structure with first zones which transmits the infrared light, i.e. invisible and second zones to intercept the invisible light, 3 an image pick-up device, 4 an image-processing section, 5 a monitoring display, 6 an infrared light floodlight (infrared light), 7 a headlight, 8 a steering controller, 9 a car distance controller, 10 a light operation switch, and 11 a headlight control circuit.

The image pick-up lens 1 condenses the light from a photographic object or an object to be picked up, and images it on the light receiving face of the image pick-up device 3 through the infrared light filter 2. The infrared light filter 2 is a filter of a comb-like structure with the first pixel zones for transmitting infrared light, and the second pixel zones for intercepting the infrared light, as mentioned later.

The image pick-up device 3 is a CCD for monochrome, and is equipped with a group (pixel rows) of the photo-diodes, which are the photosensitive elements arranged as a matrix in the light receiving face, a group of vertical charge transfer paths formed adjacently to the pixel rows through the transfer gates, and a group of horizontal charge transfer paths formed in the terminal portions of the vertical charge transfer paths. All of the pixel electric charges accumulated in the pixel rows during the exposure period, which is shorter than a field cycle are transferred to the group of the vertical charge transfer paths through the electric charge transmission gates simultaneously when an exposure period is ended.

Furthermore, synchronizing with the scanning read-out control signals applied to the group of the transfer electrodes disposed in the group of the vertical charge transfer paths, each of pixel electric charges is read out in the order of pixel arrangements, and it outputs as image signals, while transferring the pixel electric charges to the horizontal charge transfer paths every one row.

The image-processing section 4 has the following components. There are a timing generator 41, which controls the above-mentioned image pick-up device 3, an A-D converter 42, which inputs an image signal from the image pick-up device 3, an image-processing logic IC 43, a DA converter 44, which outputs the picture signal for a display to the above-mentioned monitoring display 5, RAM 45, which stores image signals, and image-processing data, a CPU 46, which performs various kinds of control processing, a ROM 47, which stores a program for image processing and control processing, a communication circuit (CAN) 48, which communicates with the above-mentioned steering controller 8 or the car distance controller 9, an input-and-output circuit (I/O) 49, which inputs instruction signals of lighting on /putting out to the headlight from the light operation switch 10 or controls the above-mentioned infrared light floodlight (infrared light) 6, and the headlight control circuit 11.

The above-mentioned A-D converter 42 in the image-processing section 4 transfers the image signals of the analog signal form outputted from the image pick-up device 3 to the image-processing logic IC 43 by converting them into a digital signal form. A function to perform signal processing such as gamma compensation of the inputted image signal may be added to the A-D converter 42.

The image-processing logic IC 43 saves image signals transferred from A-D converter 42 by storing them in RAM 45. The difference extracting processing, edge extracting processing, etc. of image signals, saved at RAM 45 are performed in accordance with the image-processing program stored in ROM 47. The processing result is stored and saved at RAM 45. Image recognition processing is performed to the above-mentioned processing result saved at RAM 45, and detection processing of the run lane etc. is performed. This detection result is converted into the picture signals (picture signals in the NTSC system) of an analog signal form through the DA translation device 44, 5 and this is displayed on the monitoring display 5.

CPU 46 controls the shutter speed of the image pick-up device 3 through the above-mentioned timing generator 41 in accordance with the control-processing program stored in ROM 47. CPU 46 further controls image processing and detection processing in the above-mentioned image-processing logic IC 43. CPU 46 then communicates with the steering controller 8 and the car distance controller 9 through the communication circuit 48. CPU 46 further inputs headlight direction signals, such as lighting/putting out lights, long luminous intensity distribution/short luminous intensity distribution, from the light operation switch 10 through the input-and-output circuit 49.

With reference to the above-mentioned detection result and the headlight direction signals, CPU 46 provides the object and run lane detection information, which are referred to by the control processing in the steering controller 8 and the car distance controller 9. Then, CPU 46 performs control processing of lighting/putting out lights, long luminous intensity distribution/short luminous intensity distribution, etc. of the infrared light floodlight 6 and the headlight 7.

The infrared light floodlight 6, that emits the infrared light, which is the invisible light and does not dazzle a driver of an oncoming car, is so installed that the front of self-vehicles may be irradiated to a distant area (long distance) by long luminous intensity distribution. The infrared light floodlight 6 is turned on or off by the input-and-output circuit 49 of the image-processing section 4.

The headlight 7 is so constituted that the long luminous intensity distribution and the short luminous intensity distribution of short-distance irradiation can be changed. The former irradiates the front of self-vehicles to a distant zone, and the latter does not dazzle the driver of opposite-vehicles. The headlight 7 is controlled by the headlight control circuit 11, thereby to switch turning on/ putting out, and long luminous intensity distribution/short luminous intensity distribution, according to the direction signals from the input-and-output circuit 49 and the light operation switch 10 of the image-processing section 4. Here, the headlight control circuit 11 performs switching control by treating preferentially the direction signals from the light operation switch 10.

The steering controller 8 controls directions of the steering wheel so that self-vehicles run in the run lane.

The car distance controller 9 generates an alarm, or restricts the running speed so that a self-vehicle may not approach a preceding car too much.

Fig. 2 is a schematic diagram showing the correlation of the pixel rows in the infrared light filter 2 and the image pick-up device 3 of comb like structure. The image pick-up device 3 has an array construction, wherein a group of photodiodes corresponding to each pixel row is arranged in a horizontal direction and each of pixel rows 31a to 31h is vertically arranged. The infrared light filter 2 has a comb like structure that has teeth extending in the transverse direction (horizontal direction), whereby infrared light interception zones 21a, 21c, ---(i.e. second pixel row zones) are superimposed on the odd number pixel rows 31a, 31c, --and infrared light transmit zones 21b, 21d ... (i.e. first pixel zones) are 5 superimposed on the even number pixel rows 31b, 31d, ---.

In a construction wherein a micro-lens is formed in each of the pixels of the image pick-up device 3 so as to collect light, the above-mentioned infrared light filter may be formed on the micro-lens. The image pick-up device 3, which has the superimposed infrared light filter 2 can output visible light zone image signals from the pixel rows 31a and 31c of odd numbers, where the interception zones 21a and 21c, ---are superimposed on the odd number pixel rows, and can output invisible light zone image signals from the pixel rows 31b, 31d, --- of even numbers, where the infrared light transmit zones 21b, 21d, --- are superimposed on the even number pixel rows.

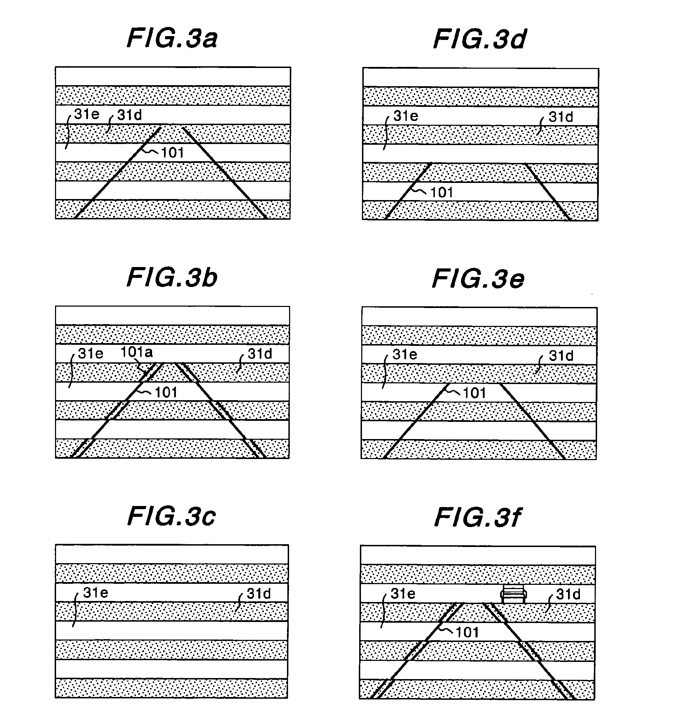

Figs. 3a to 3f are schematic diagrams of the images based on the image signals acquired by picking-up the white lines, which show a run lane on the road through the infrared light filter 2 mentioned-above. The referential numbers of the pixel rows concerned show the image zone based on the image signals of the visible light zones obtained from the pixel rows (31a, 31c, 31e, ...) by superimposing the infrared light interception zones (21a, 21c ...) of the infrared light filter 2 etc. on the pixel rows.

The referential numbers of the pixel rows concerned show the image zones based on the image signals of the invisible light zones obtained from pixel rows 31b, 31d, etc. by superimposing infrared light transmission zones 21b, 21d, etc on the pixel rows.

Fig. 3a shows an ideal image where white the line images 101 is a clear image in both an infrared light transmission zone 31d and an infrared light interception zone 31e.

Fig. 3b shows an image based on the image signals picked-up through the infrared light filter 2 of the comb like structure in the daytime. In the infrared light transmission zone 31 d of the infrared light filter 2, the image of the white line image 101 a looks faded.

Fig. 3c shows an image based on the image signals acquired by picking-up at night, where the infrared light floodlight 6 and the headlight 7 are switched off. This is the image which cannot recognize the white line images.

Fig. 3d shows an image based on the image signals acquired by picking-up at night, where the light is switched on by short luminous intensity distribution. The white line image 101 in only the close area to the self-vehicle can be recognized because only the short-distance area is irradiated by the short luminous intensity distribution of the headlight 7.

Fig. 3e shows an image based on the image signals, which are obtained by picking-up the image at night, where the floodlight 7 is switched on to long luminous intensity distribution. The white line image 101 can be recognized over the long distance area irradiated by the long luminous intensity distribution of the headlight 7.

Fig. 3f shows an image based on the image signal acquired by picking-up the image irradiated with the infrared light of the long luminous intensity distribution irradiated by turning on the infrared light floodlight 6 and irradiated with the infrared light of the short luminous intensity distribution by turning on the headlight 7 at night. The white line image 101 can be recognized over a longer distance area by irradiation with the infrared light of long luminous intensity distribution.

Thus, the distance where the white lines are recognizable as the run lane on the road depends on day or night, or the lighting state of the infrared light floodlight 6 and the headlight 7.

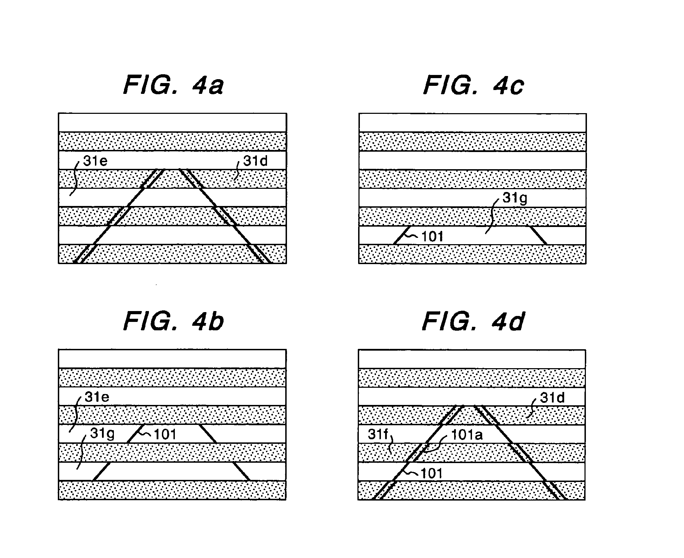

A method of detecting the run lane is explained with reference to Fig. 4 in which the run lane is detected by recognizing the white line images of the image signals picked-up by the image pick-up device 3 through the infrared light filter 2.

In recent years, the high pixel density of the image pick-up device 3 is under progress, resulting in high resolution. Therefore, sufficient resolution for image recognition is obtained by the image signals from the pixel rows for every other sequence in the pixel groups of the matrix arrangement. For example, in case of the image (refer to Fig.4b) in the image signals acquired by picking-up through the infrared light filter 2 of comb like structure in the daytime, the image recognition of the white lines can be carried out based on the image signals of the visible light zones obtained from the pixel rows (31e, 31g, -) corresponding to the infrared light interception zones (21e, 21g, -) of the infrared light filter 2 (the white line presumption method).

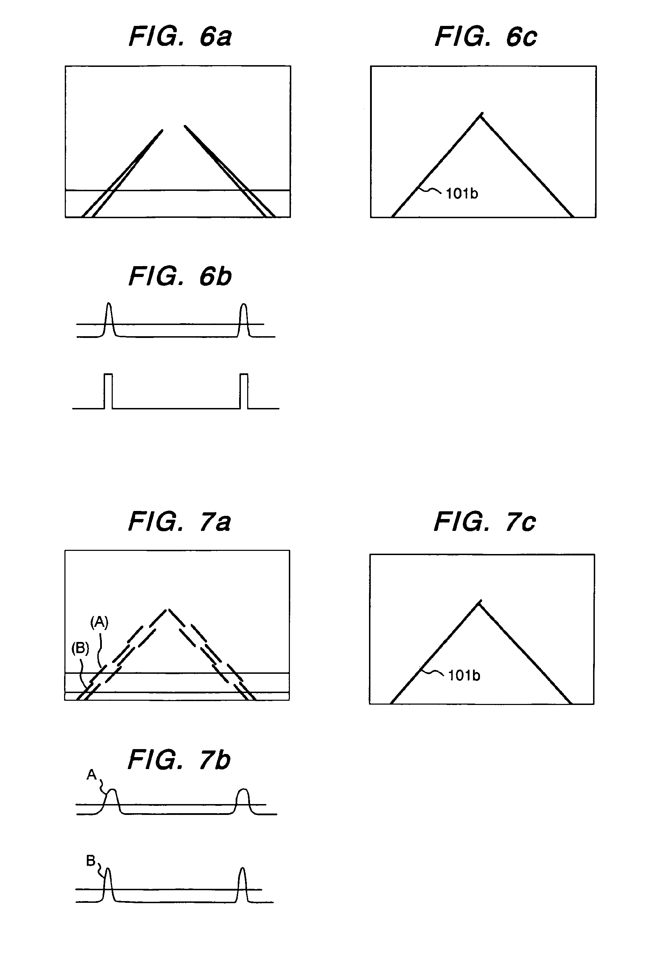

The example of the white line presumption method of this white line image recognition is explained with reference to Figs. 6a to 6c.

As shown in Fig. 6a, the image obtained by picking-up the white lines drawn on the road surface is thick in a front short-distance area (lower zone of the screen), and thin in a long distance area (upper zone of the screen). In such the image, when processing (binary coding processing) of the image signals to detect the degree of change of the brightness (concentration value) of the image in the transverse direction of the image signals is performed with respect to given pixel rows, the concentration value in the image signals of each of the pixel rows will become as shown in Fig. 6b.

Here, the portion in which the concentration value becomes higher from the lower is defined as standup edge, and the portion in which the concentration value becomes lower from a higher is defined as a falling edge. The white lines are each constituted by the pair of a left standup edge and a right falling edge. Then, the left-hand white line is obtained by extracting and carrying out Hough conversion at the falling edge of these pairs. Moreover, the right-hand white line is obtained by extracting and carrying out Hough conversion at the standup edge of these pairs. As a result, the white line image 101b as shown in Fig. 6c is obtained.

In this white line presumption method, it is possible to detect a run lane by recognizing the white line images even at positions sufficiently far from the self-vehicle ahead with the image signals that are acquired by picking-up in the daytime. However, since a recognizable white line images 101 according to the image based on the image signals picked-up at night will be restricted to the irradiation range of the headlight 7 (refer to Fig. 4c), it is impossible to fully detect the run lane at positions over a long distance based on the recognition result of the white line images 101.

So, in such the environment, the infrared light floodlight 6 is turned on. With respect to the range farther than the area irradiated with the headlight 7, i. e. the range irradiated with infrared light of the infrared light floodlight 6, the image based on the image signals acquired from the pixel rows (31d, 31f) of the infrared light transmission zones are added, and recognition processing of the white line images 101,101 a is performed (refer to Fig. 4d). At this time, since the white line images 101 a in the infrared light transmission zones are fading, an edge extracting processing is performed in the following processing.

That is, since the white line image 101 a looks fading, the distance (width of a white line image) between both the sides of the white line images 101 a becomes larger (wider). Then, in the edge extracting processing, the halfway point of the edge coordinates of both the sides of a white line image 101 a is determined, and then compensation is carried out, wherein two points each being displaced by one pixel in left and right hand directions are regarded as both ends of the white line image.

Thereafter, the image recognition processing of the white line is performed (the synthetic presumption method of a white line). Here, the width of the long-distance white line image becomes extremely narrow in an image compared with the width of the white line image of the short distance.

An example of the synthetic presumption method of this white line is explained with reference to Fig. 7.

As shown in Fig. 7a, the image based on the image signals acquired by picking-up the white lines drawn on the road surface is thicker in a front short-distance area (lower zone of the screen), and becomes thinner in a long distance area (upper zone of the screen). Furthermore, in the image signals of an infrared light transmission zone, a concentration value becomes higher and the contrast of the image becomes lower, compared with an infrared light shading zone.

When the processing (binary coding processing of image signals), which detects the degree of change of the brightness (concentration value) of an image in a transverse direction is performed to such the image signals, the image signals of the invisible light zone corresponding to the infrared light transmission zone will become like A of Fig. 7b, and the image signals of the visible light zone corresponding to the infrared light interception zone will become like B of Fig. 7b.

Then, the left hand white line is obtained by carrying out Hough conversion by extracting the falling edge of these pairs, and the right hand white lines are obtained by carrying out Hough conversion by extracting the standup edge of these pairs; as a result, white line image 101b shown as Fig. 7c is obtained.

In the edge extraction, the edge in the zone of the image signals of the invisible light of an infrared light transmission zone shifts a little as a matter of fact. Therefore, compensation in the horizontal direction is added in the edge extraction in the zone of the image signals of the invisible light (infrared light transmission) zone.

The amount of compensation is large at the lower zone of the screen, and it is small at the upper zone. Thus, by rectifying and extracting the edge, an error with an actual boundary position becomes smaller, and the accuracy of the Hough conversion increases.

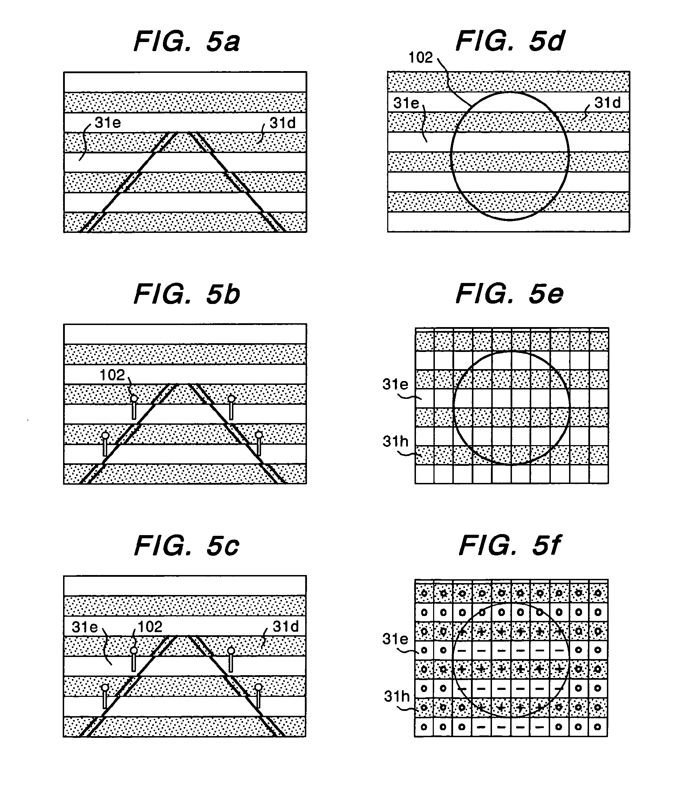

Next, a detection method of a run lane based on the image signals acquired by picking-up the environment of the vehicles where the contrast between the white lines and the road surface is low is explained with reference to Figs. 5a to 5f.

In the image (refer to Fig. 5a) based on the image signals acquired by picking-up the environment of the vehicles, where the contrast ratio between the white lines and the road surface is low, i.e., the image signals acquired by picking-up the white lines whose whiteness fell down by the dirt or by degradation, it is difficult to recognize the run lane from the image signals and is impossible to detect the run lane by the conventional white line recognition method. In such cases, a method of presuming the run lane is carried out by recognition of reflector images 102, such as light reflectors that are currently installed along with the run lane at many roads, and by referring to the positions of reflectors (refer to Fig. 5b).

It is a fundamental view that by turning on the infrared light floodlight 6 to emit infrared light and to pick-up the infrared light reflected by the light reflectors is picked up with the image pick-up device 3 (refer to Fig. 5c). Here, the image of the image signals of the pixel rows adjoining the upper and lower sides of the transmission zones and interception zones of the infrared light filter 2 are considered almost the same. From this fact, when the difference between the image signals (images) of the pixel rows, which adjoin the images adjoining the upper and lower sides of the transmission zone and interception zone of the infrared light filter 2 is obtained, the portions with strong infrared light have a large quantity of difference. Then, a run lane is presumed by recognizing the large portion of this quantity of difference as a position of the light reflectors (reflector image 102).

Fig. 5d is an enlarged view of the portion of the reflector image 102 in the picked-up image based on the image signals. Although the infrared light transmission zones and the interception zones are indicated by expansion in the image of Fig. 5c, each of the pixel rows is located by changing off with each other, as a matter of fact, the reflector image 102 is the image based on the image signals of two or more pixel sequences. If a pixel is assigned to the reflector image 102, it will become as shown in Fig. 5e.

This image is scanned sequentially from the upper part of the image until the present pixel to obtain the accumulated difference by calculation with the following equation. (Difference quantity value of the present pixel) = (signal value of the present pixel) - (signal value of the pixel below one pixel)

In the infrared light transmission zones, since the quantity of light for the transmitted infrared light zones is larger than that of the infrared light interception zones, the symbol of the difference quantity of the present pixel on the reflector image 102 is positive (+), and on the other hand, it is negative (-) in the infrared light interception zones.

Fig. 5f shows the computation result. As to the difference value image of the pixels, the zones, where (+) are horizontally arranged in a line, and the zones, where (-) are perpendicularly arranged in a line, alternatively occur in the portions having strong reflection of infrared light. Such the zones can be recognized as being light reflector plates (reflector image 102). Thus, the run lane can be presumed based on the position of the recognized light reflector plate (presumption method on white line difference).

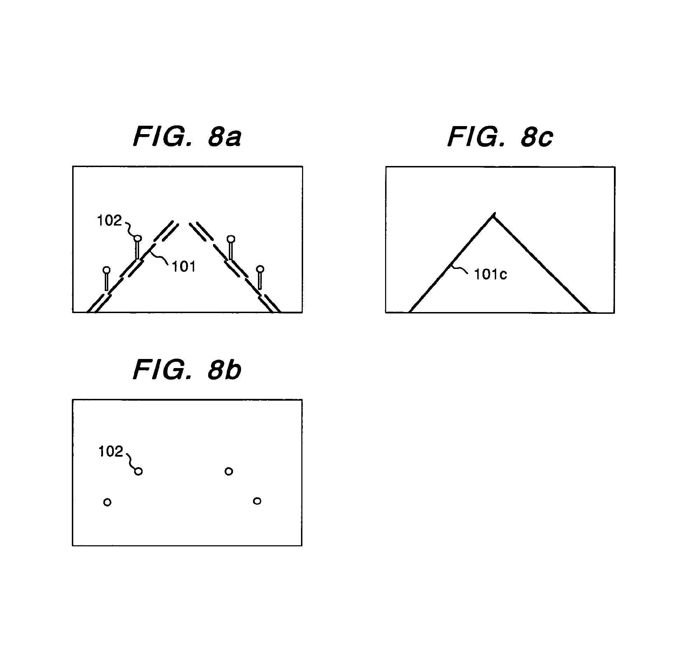

An example of this presumption method on the white line difference is explained with reference to Fig. 8. If the environment on the road is normal, the white line images 101 and reflector pair images 102 will become clear images as shown in Fig. 8a. If the white lines are dirty or worn out, the white line images cannot be recognized as white lines based on the image signals, as shown in Fig. 8b.

However, if the light reflectors are installed along with the run lane, the reflector images 102 are recognized to decide the positions of light reflectors so that the white line images can be presumed by the Hough conversion based on the positions of the light reflectors. Since the presumption method on the white line difference has little amount of information compared with the above-mentioned white line presumption method and the white line synthetic presumption method, and since the light reflectors in distant positions are not arranged along with the run lane in many cases, the information frequently becomes an error presumption if the information of light reflectors in the distant places is referred to.

Then, in this presumption method on the white line difference, the information on a short-distance area (lower zone of the screen) is respected, and it is desirable to presume white line image 101c, as shown in Fig. 8c, by carrying out straight line approximation from the lower part of the screen using 2 to 3 pieces of information,.

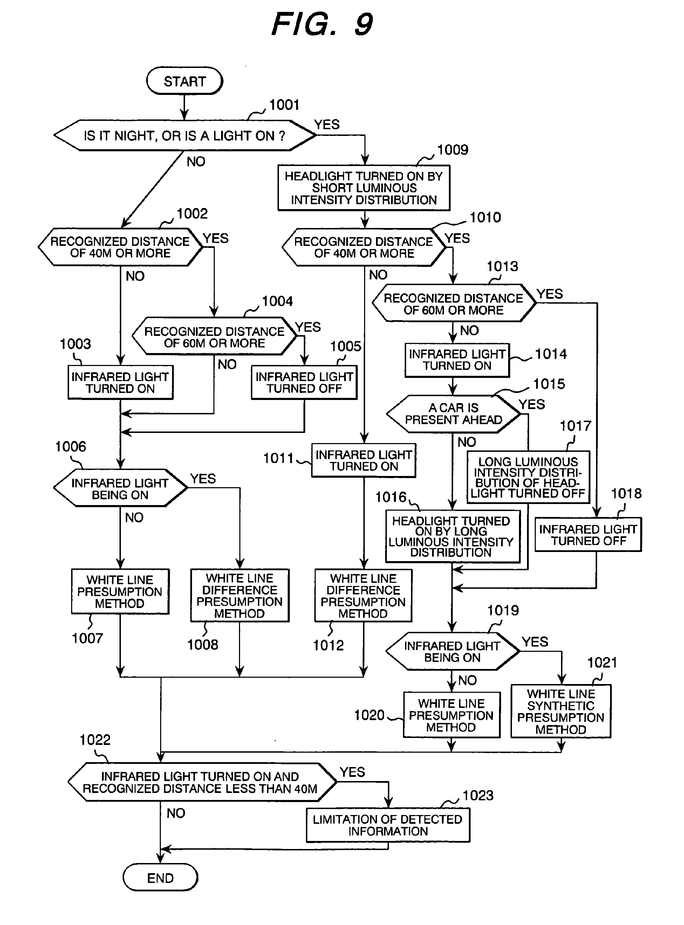

Here, the control processing where such the image recognition processing method and switching of the infrared light floodlight 6 are switched and the lighting state of the headlight 7 is switched is explained with reference to Fig. 9. CPU46 in the image-processing section 4 mainly performs this control processing.

### Step 1001

Day and night are judged, followed by branching the control processing. In this judgment, when the driver is generating the direction signal for operating the light operation switch 10 and he or she directs lighting of a headlight 7, the situation is judged as night.

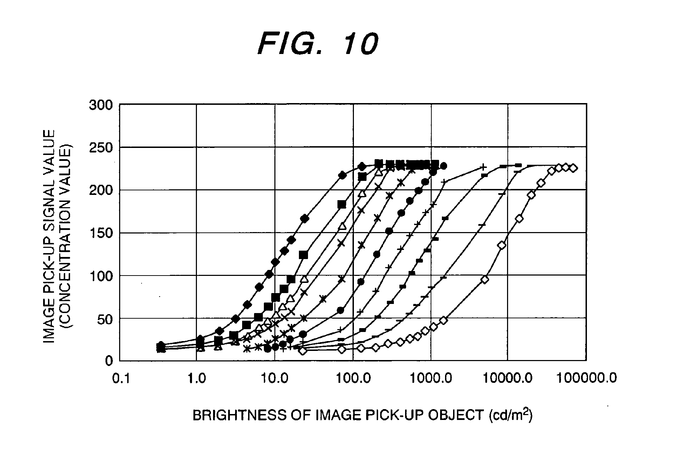

When the direction signals for lighting the headlight are not issued, the image signals (brightness of an image etc.) and image pick-up control signals for picking-up are analyzed so as to judge whether it is night or daytime. Here, a judging method for judging daytime or night based on the image signals and image pick-up control signals, which are obtained by picking-up, is explained with reference to Figs. 10 to 12.

In Fig. 10, the horizontal axis shows the physical quantity (for example, cd/m²) of the brightness of an image picked up object, and the vertical axis shows an example of the values (concentration value) of an image signals, which were taken in this image pickeded up object by changing an electronic shutter value (shutter speed) and picking-up the image object with the image pick-up device 3. The electronic shutter value is defined as time for accumulating an electric charge in CCD in the image pick-up device 3. Here, the properties of ten steps of shutter speeds are shown. Sequentially from left-hand side, the characteristic curves are 1/60, 1/120, 1/180, 1/250, 1 /500, 1/1000, 1 /2000, 1 /4000, 1 /10000, and 1/30000.

When the light of the headlight of an oncoming car impinges the image pick-up device 3 of the self-vehicle, while picking-up at a low shutter speed with such the image pick-up device 3 at night, a concentration value of the image pick-up device 3 will be saturated (bright saturation), because of being too much bright.

On the other hand, if vehicles move to a zone without road lights from a zone with road lights, it will become dark too much (dark saturation) in the range out of the irradiation of the headlight 7, and a required concentration value will not be obtained. With reference to the concentration value of image signals, CPU 46 gives directions to a timing generator 41 with reference to the concentration value difference so that the shutter speed acquires the image signals of the concentration value in the proper range.

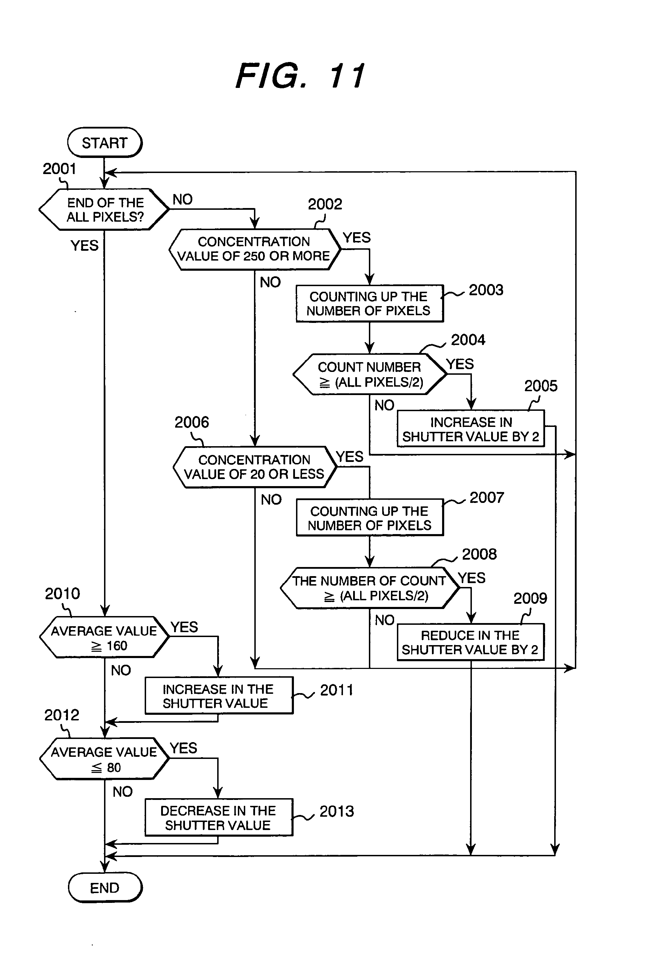

Fig. 11 shows a method of a control processing for correcting the electronic shutter speed that CPU 46 performs.

### Step 2001

CPU 46 judges whether the following processing about each pixel of the picked-up and acquired image signal is completed, followed by branching the processing.

### Step 2002

If the processing is not completed, the concentration value of the pixels at present will be judged, followed by branching the processing.

### Step 2003

When the concentration value of the pixel is 250 or more, it is presumed that the pixels are in bright saturation, and the counter number of the bright saturation pixels is increased.

### Step 2004

It is judged whether the count number of the bright saturation pixels is half the total number of the pixels, followed by branching the processing.

### Step 2005

When the count value of the number counter of pixels of bright saturation is half the total number of the pixels, it is presumed that the electronic shutter speed does not harmonize at all (too slow)and the electronic shutter speed is increased by two steps (faster).

### Step 2006

If the concentration value is 250 or less, it is judged whether the concentration value is 20 or less, followed by branching the processing.

### Step 2007

When the concentration value is 20 or less, it is presumed that the zone is in dark saturation, and the counter number of the dark saturation pixels is increased.

### Step 2008

It is judged whether the counter number of the dark saturation pixels is half the total number of the pixels, followed by branching the processing.

### Step 2009

If the counter number of the dark saturation pixels is half the total number of the pixels, it will be presumed that the electronic shutter speed does not harmonize at all (too fast), and the shutter speed is decreased by two steps (slower).

### Step 2010

If there are few saturation zones, and when the processing of all the pixels is completed, the average concentration value of the screen is computed, followed by branching the processing.

### Step 2011

When the average concentration value is 160 or more, the electronic shutter speed is increased by one step (faster).

### Step 2012

It is judged whether the average concentration value is 80 or less, followed by branching the processing.

### Step 2013

When the average concentration value is 80 or less, the electronic shutter speed is decreased by one step (slower).

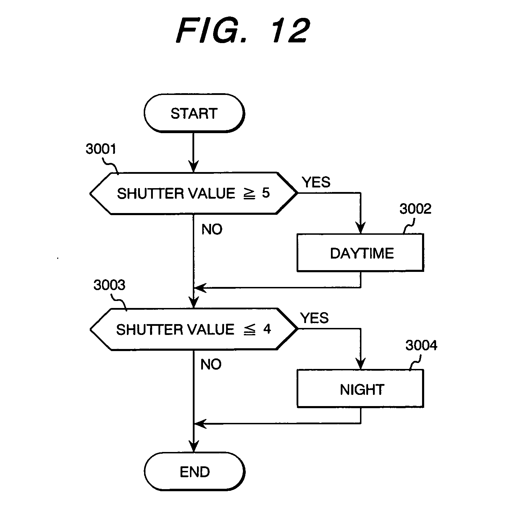

As having discussed, the image signals of appropriate brightness can be acquired by controlling the electronic shutter speed. That is, the average concentration value of the image signals acquired at the electronic shutter speed controlled in this way is within a certain range. The electronic shutter speed, which can acquire such the image signals is faster in the daytime, and is slower at night. From this fact, daytime and night can be judged with reference to the electronic shutter speed (electronic shutter value). This judgment method is explained with reference to Fig. 12.

### Step 3001

Whether the electronic shutter value is five or more is judged, followed by branching the processing.

### Step 3002

When the shutter value is five or more, it is judged that it is daytime and suitable control processing is performed.

### Step 3003

Whether the shutter value is four or less is judged, followed by branching the processing.

### Step 3004

When the shutter value is four or less, it is judged that it is night, and a suitable control processing is performed. When a judgment result corresponds to neither, the control processing result based on the last judgment is maintained.

### Step 1002 (refer to Fig. 9)

When the judgment result is daytime, it is judged whether the white line recognition distance by the last image recognition processing is 40m or more, followed by branching the processing. Here, technical meaning of 40m is an arriving distance of the irradiation in the short luminous intensity distribution of the headlight 7. Moreover, the judgment of the distance is made with correlation of the perpendicular position of the image.

### Step 1003

When the white line recognition distance is less than 40m, the infrared floodlight 6 is turned on.

### Step 1004

It is judged whether the white line recognition distance is 60m or more, followed by branching the processing.

### Step 1005

When the white line recognition distance is 60m or more, the infrared light floodlight 6 is switched off. When the white line recognition distance is 40m or more but less than 60m, the lighting state of the infrared light floodlight 6 is not changed (the last control state is maintained).

### Step 1006

The lighting state of the infrared light floodlight 6 is judged, followed by branching the processing.

### Step 1007

When the infrared light floodlight 6 is switched off, the image recognition processing by the white line presumption method is performed, and the run lane is detected. While performing this processing, the state that the image recognition of the white line is 40m or more is stable and continued.

### Step 1008

When the infrared light floodlight 6 is on, the image processing by the presumption method on white line difference is performed. Since the condition of the white lines is bad while performing the processing, the state is one what detection of a run lane is performed by presumption with reference to a light reflector (reflector image).

### Step 1009

When the judgment at step 1110 is night, the headlight 7 is turned on by short luminous intensity distribution (short-distance irradiation zone).

### Step 1010

It is judged whether the white line recognition distance by the last recognition processing is 40m or more, followed by branching the processing.

### Step 1011

When the white line recognition distance is less than 40m, the infrared light floodlight 6 is turned on.

### Step 1012

Image recognition processing by the presumption method on white line difference is performed.

### Step 1013

When the white line recognition distance is 40m or more, it is judged whether it is 60m or more, followed by branching the processing.

### Step 1014

When white line recognition distance is 40m or more but less than 60m, the infrared floodlight 6 is turned on.

### Step 1015

It is judged whether other vehicles are running ahead. Here, other vehicles running ahead include the preceding cars running in the same direction and oncoming cars.

### Step 1016

When other running vehicles cannot be found ahead, the headlight 7 is turned on to the long luminous intensity distribution (long-distance irradiation) so that the driver of the self-vehicle can recognize with eyes on the road over a long distance.

### Step 1017

When a running vehicle is ahead, the headlight 7 is changed to short luminous intensity distribution (short-distance irradiation) in order to avoid dazzling the driver of the oncoming car.

Here, explained is a method of distinguishing at least one of a preceding car, an oncoming car, a light reflector, and traffic lights. This method is performed with discernment of the things (luminous article) whether they emit light itself or do not emit light (reflector), but reflect light, and combinations thereof. The oncoming car and traffic lights emit light (luminous article). As for the oncoming car, the headlight 7 is emitting white light, and traffic lights emit light of specific color lights.

That is, the luminous articles are specified as those having especially bright parts (image) in the visible light zone image signals of the infrared light interception zone, and the oncoming cars or traffic signals are specified as those being bright when the infrared light floodlight 6 is on, but do not have dark positions, when the floodlight 6 is off.

Only the reflectors reflect light. Therefore, it is possible to distinguish by comparing the continued image signals at the time of no illumination of the floodlight 6 with those at the time of illumination with the floodlight 6. That is, positions that become bright at the time of illumination with the headlight 6, but the positions become dark at the time of no illumination are specified as reflectors 102 and their positions.

Preceding cars have such a construction that portions emit light (taillight) and portions reflect light (reflector), and that they are located closely to each other. Therefore, especially bright parts in the image signals of the visible light zones of the infrared light interception zones are light emitting objects (taillight), and there are parts in the vicinity thereof that become bright at the time of illumination of the infrared light floodlight 6, and become dark at the time of not illumination (reflector).

### Step 1018

When the white line recognition distance is 60m or more, the infrared light floodlight 6 is switched off.

### Step 1019

The lighting state of the infrared light floodlight 6 is judged, followed by branching the processing.

### Step 1020

When the infrared floodlight 6 is put out, the processing of the white line presumption method is performed. While performing this processing, it is possible to recognize safely the white lines of 40 m or more in this state.

### Step 1021

When the infrared light floodlight 6 is on, the processing of the white line synthetic presumption method is performed. While performing this processing, the state is that where the white lines in a long distance are recognized by the image pick-up using infrared light, and presumption is performed using the white line information in the long distance.

### Step 1022

A state of recognition of the white lines is judged. It is judged whether the white line recognition distance is less than 40m in the state where the infrared light floodlight 6 is turned on, followed by branching the processing.

### Step 1023

In case that the white line distance recognized in the state where the infrared light floodlight 6 is turned on is less than 40m, the state is judged as that the state of the white lines is bad, and there is no light reflector, or the reflectors are heavily dirty. Under the circumstance, since it is impossible to detect the driving conditions correctly, the information for detecting the run lane under the circumstance should not be used for the steering controller 8, the car distance controller 9, etc.

The image-processing section 4 performs processing which identifies a white line, a light reflector, traffic lights (traffic signal), a preceding car, an oncoming car, etc, and detects a run lane by image recognition processing, while controlling lighting of the infrared light floodlight 6 and the headlight 7. During that time, the picture signals to be displayed on the monitor screen 5 are generated by using visible light zone image signals and invisible light zone image signals alternatively in accordance with the state of lighting of the infrared floodlight 6.

In this embodiment, although infrared light (infrared light floodlight) was used as an invisible light, ultraviolet light (ultraviolet light floodlight) may be used as a modification. In such the case, the infrared light filter 2 is changed to a ultraviolet light filter.

Moreover, there is such modification that the teeth of the comb like infrared light filter 2 can extend in a lengthwise direction (perpendicular), rather than the transverse direction (horizontal). In such the construction, the difference value of image signals calculated for detecting the reflector image recognition by the white line difference presumption method is a difference value at each of both left and right side adjoining pixels. Moreover, in the image pick-up device 3, the pixel rows, which have sensitivity to infrared light (invisible light) are so arranged that the upper part of the pixel rows in the vertical direction is arranged more densely than the lower part of pixel rows. As a result, it is possible to acquire more image information in the long distance areas.

The present invention provides an image-processing section for picking-up the surrounding of vehicles, which has alternative arrangement of pixel row zones having sensitivity to visible light and pixel row zones having sensitivity to invisible light. The image picking-up device has the image signal processing section for recognizing the articles that uses image signals of visible light zones obtained from the pixel rows sensitive to the visible light and image signals of invisible light zones obtained from the pixel rows sensitive to invisible light. As a result, it is possible to provide a downsized on board image processing apparatus that has high detection performance of white lines, reflectors (run lane), etc.

Since the above-mentioned image signal-processing section can distinguish among high reflection articles, low reflection articles and light emitting articles based on difference information between visible light zone image signals and invisible light zone image signals, it is possible to recognize the preceding cars, on-coming cars, reflectors and traffic signals with high accuracy.

Since the above-mentioned image pick-up device of the constitution and image signal processing can carry out the above-mentioned recognition, the above-mentioned advantages are achieved by relatively simple construction.

## Claims

1. On board image processing apparatus for recognizing surrounding objects of a vehicle, based on image signals obtained by picking-up the circumference of the vehicle with an image pick-up device (3), the image pick-up device (3) being equipped with first pixel row zones (31a, 31c,... ) which have sensitivity to visible light and second pixel row zones (31b, 31d,... ) which have sensitivity to invisible light alternatively, wherein the apparatus further comprises an image signal processing section (4) for recognizing the objects using visible light zone image signals obtained from the first pixel row zones (31a, 31c,... ) and image signals obtained from the second pixel row zones (31b, 31d,.....).

2. On board image recognition apparatus according to claim 1, wherein infrared light is used as the invisible light.

3. On board image recognition apparatus according to claim 1, wherein ultraviolet light is used as the invisible light.

4. On board image recognition apparatus according to any of claims 1 to 3, wherein each of the first pixel row zones (31a, 31c,... ) of the image pick-up device (3) that are sensitive to visible light are constituted by each of the first light sensitive elements sensitive to visible light, and each of the second pixel row zones of the image pick-up device that are sensitive to the invisible light are constituted by second light sensitive elements sensitive to invisible light.

5. On board image recognition apparatus according to any of claims 1 to 4, wherein the image pick-up device (3) has a first filter (21a, 21c,..) that transmits visible light disposed in front of the first light sensitive elements to constitute first pixel row zones (31a, 31c,... ), and a second filter (21b, 21d... ) that transmits invisible light disposed in front of the second element to constitute the second pixel row zones (31b, 31d,....).

6. On board image recognition apparatus according to any of claims 1 to 5, wherein each of the first pixel row zones (31a, 31c,....) sensitive to visible light and each of the second pixel row zones (31b, 31d,... ) sensitive to invisible light are constituted by pixel rows arranged in the horizontal direction, both of the pixel row zones being arranged in perpendicular direction alternatively.

7. On board image recognition apparatus according to any of claims 1 to 6, wherein the density of the first pixel row zones sensitive the visible light is higher than that of the second pixel row zones sensitive to the invisible light in the image pick-up device.

8. On board image recognition apparatus according to any of claims 1 to 5, wherein each of the first pixel row zones sensitive to the visible light and each of the second pixel row zones sensitive to the invisible light are constituted by pixel rows arranged in the perpendicular direction, both of the pixel row zones being arranged in the horizontal direction alternatively.

9. On board image recognition apparatus according to any of claims 1 to 8, wherein the image signal processing section (4) recognizes a high reflection object and a low reflection object based on information of a difference value between the first pixel row zones and the second pixel row zones that adjoin each other in the horizontal direction or the perpendicular direction.

10. On board image recognition apparatus according to any of claims 1 to 9, wherein the image signal processing section (4) recognizes, based on the recognition results of the high reflection object and the low reflection object, at least one of a preceding car, an oncoming car, a reflector and a traffic signal.

11. On board image recognition apparatus according to any of claims 1 to 10, wherein the image signal processing section (4) performs controlling of turn-on of invisible light floodlight (6), based on the visible light image signals.

12. On board image recognition apparatus according to any of claims 1 to 11, wherein the image signal processing section (4) detects a run lane based on the detected object.

13. On board image recognition apparatus according to any of claims 1 to 12, wherein the image signal processing section (4) uses selectively, based on the state of turn-on of the invisible light floodlight (6), the visible light image signals and the invisible image signals to create image signals for displaying on a monitor screen (5).

14. On board image recognition apparatus preferably according to any of claims 1 to 13, comprising an image pick-up lens (1) and an image pick-up device (3), wherein there is disposed between the image pick-up lens (1 ) and the image pick-up device (3) a filter (2) having an area (21a, 21c,....) that transmits visible light and an area (21b, 21d,... ) that intercepts the visible light.

15. On board image recognition apparatus according to any of claims 1 to 14, wherein the image pick-up device (3) is a CCD for monochrome.

16. On board image recognition apparatus, preferably according to any of claims 1 to 14, comprising an image pick-up lens (1) and an image pick-up device (3), wherein the image pick-up device (3) is constituted by a photosensitive element having sensitivity to visible light and a photosensitive element having sensitivity to invisible light.
